# EUROPEAN PATENT APPLICATION

(11) **EP 3 992 467 A1**
(43) Date of publication of application: **04.05.2022**
(21) Application number: 21206130.3
(22) Date of filing: 03.11.2021
(51) Int. Cl.: F04D 29/16, F04D 29/10, F04D 17/10, F04D 25/06, F04D 29/056

(54) **EROSION MITIGATING TWO PIECE LABYRINTH SEAL MATING RING**

(30) Priority: 03.11.2020 US 202017088100
(71) Applicant: Hamilton Sundstrand Corporation, Charlotte, NC 28217-4578 (US)
(72) Inventor: HIMMELMANN, Richard A., Beloit, 53511 (US); MERRITT, Brent J., Southwick, 01077 (US)
(74) Representative: Dehns

(57) **Abstract**

A compressor assembly includes an impeller (14) rotatable about a central axis, and a seal assembly. The seal assembly includes a labyrinth seal (32) defining a seal interface (52) with a sealing element of the impeller, and a seal support ring into which the labyrinth seal is installed. The seal support includes a deflector ramp (54) fluidly downstream of the seal interface. The deflector ramp is configured to turn an airflow leaking through the seal interface radially inwardly toward the central axis.

## Description

### BACKGROUND

Exemplary embodiments pertain to the art of environmental control units for, for example, aircraft.

On some aircraft, the cabin and/or other areas are pressurized by an electrically-driven cabin air compressor (CAC). The cabin air compressor takes in air flow at atmospheric pressure from outside the aircraft and compresses the airflow to a comfortable pressure for the aircraft cabin. This compressed air flow is then directed into the cabin.

In some operating conditions, erosion damage occurs to a bearing support housing downstream of the compressor impeller. This erosion damage occurs when foreign object particles bypass a labyrinth seal between the impeller and the bearing support housing and subsequently impact the bearing support housing. Such erosion of the bearing support housing shortens the service life of the bearing support housing specifically and the cabin air compressor in general.

### BRIEF DESCRIPTION

In one embodiment, a compressor assembly includes an impeller rotatable about a central axis, and a seal assembly. The seal assembly includes a labyrinth seal defining a seal interface with a sealing element of the impeller, and a seal support ring into which the labyrinth seal is installed. The seal support includes a deflector ramp fluidly downstream of the seal interface. The deflector ramp is configured to turn an airflow leaking through the seal interface radially inwardly toward the central axis.

Additionally or alternatively, in this or other embodiments the seal support ring further includes a plurality of circumferentially spaced teeth configured to diffuse a tangential component of the airflow.

Additionally or alternatively, in this or other embodiments the plurality of circumferentially spaced teeth trap foreign object particles from the airflow between adjacent teeth of the circumferentially spaced teeth.

Additionally or alternatively, in this or other embodiments the deflector ramp extends radially inboard of a radial location of the seal interface.

Additionally or alternatively, in this or other embodiments the labyrinth seal is formed from a first, relatively soft material and the seal support ring is formed from a second, relatively hard material.

Additionally or alternatively, in this or other embodiments the compressor assembly includes a shaft operably connected to the impeller, and a bearing assembly. The bearing assembly includes a bearing supportive of the shaft and a bearing support housing into which the bearing assembly is installed. The seal support ring is located axially between the impeller and the bearing support housing.

Additionally or alternatively, in this or other embodiments the deflector ramp deflects the airflow from impacting on the bearing support housing.

Additionally or alternatively, in this or other embodiments the seal support ring is installed to the bearing support housing.

Additionally or alternatively, in this or other embodiments the sealing element of the impeller is located at a sealing flange of the impeller extending axially from the impeller.

In another embodiment, cabin air compressor includes a compressor housing having an inlet and an outlet, and an impeller located in the housing. The impeller is rotatable about a central axis and is configured to compress an airflow directed through the inlet and direct the compressed airflow to the outlet. A seal assembly includes a labyrinth seal defining a seal interface with a sealing element of the impeller, and a seal support ring into which the labyrinth seal is installed. The seal support includes a deflector ramp fluidly downstream of the seal interface. The deflector ramp is configured to turn an airflow leaking through the seal interface radially inwardly toward the central axis.

Additionally or alternatively, in this or other embodiments the seal support ring further includes a plurality of circumferentially spaced teeth configured to diffuse a tangential component of the airflow.

Additionally or alternatively, in this or other embodiments the plurality of circumferentially spaced teeth trap foreign object particles from the airflow between adjacent teeth of the circumferentially spaced teeth.

Additionally or alternatively, in this or other embodiments the deflector ramp extends radially inboard of a radial location of the seal interface.

Additionally or alternatively, in this or other embodiments the labyrinth seal is formed from a first, relatively soft material and the seal support ring is formed from a second, relatively hard material.

Additionally or alternatively, in this or other embodiments the cabin air compressor includes a shaft operably connected to the impeller, and a bearing assembly. The bearing assembly includes a bearing supportive of the shaft, and a bearing support housing into which the bearing assembly is installed. The seal support ring is located axially between the impeller and the bearing support housing.

Additionally or alternatively, in this or other embodiments the deflector ramp deflects the airflow from impacting on the bearing support housing.

Additionally or alternatively, in this or other embodiments the seal support ring is installed to the bearing support housing.

Additionally or alternatively, in this or other embodiments an electrical motor is operably connected to the shaft to drive rotation of the impeller about the central axis.

Additionally or alternatively, in this or other embodiments the sealing element of the impeller is located at a sealing flange of the impeller extending axially from the impeller.

Additionally or alternatively, in this or other embodiments the compressed airflow is directed from the outlet to a cabin of an aircraft.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of a cabin air compressor;
FIG. 2 is a perspective view of an embodiment of a labyrinth seal mating ring of a cabin air compressor;
FIG. 3 is a partial cross-sectional view of an embodiment of a labyrinth seal ring installed into a cabin air compressor;
FIG. 4 is another perspective view of an embodiment of a labyrinth seal ring; and
FIG. 5 is another partial cross-sectional view of an embodiment of a labyrinth seal ring installed into a cabin air compressor.

### DETAILED DESCRIPTION

A detailed description of one or more embodiments of the disclosed apparatus and method are presented herein by way of exemplification and not limitation with reference to the Figures.

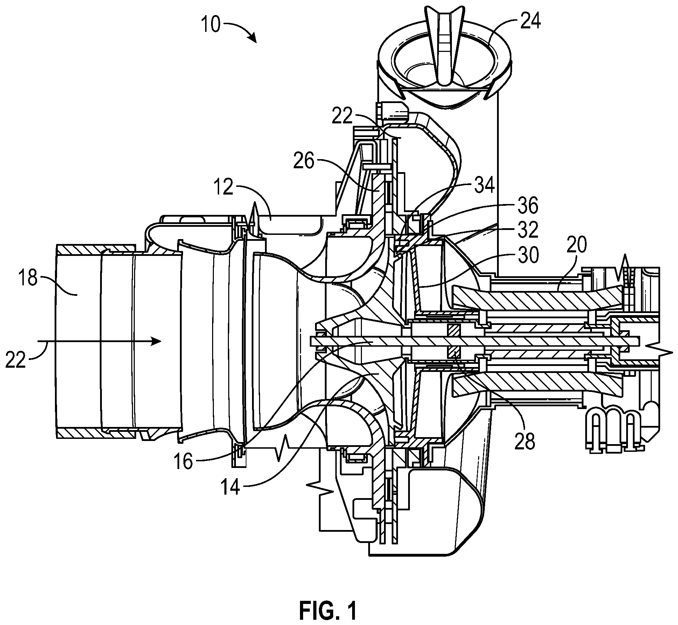

Referring now to FIG. 1, illustrated is a schematic illustration of an embodiment of a cabin air compressor 10. The cabin air compressor 10 includes a compressor housing 12 in which a compressor impeller 14 is located. The compressor impeller 14 is driven by a shaft 16. The shaft 16, in turn, is driven by a power source, which in some embodiments is an electric motor 20. Airflow 22 at ambient pressure enters the cabin air compressor 10 at an inlet 18 and is urged across the compressor impeller 14 and compressed. The compressed airflow 22 then is directed through an outlet 24 to a selected location, for example, aircraft cabin 26. The shaft 16 and compressor impeller 14 are supported by a bearing 28, which is installed in a bearing support housing 30 located in the compressor housing 12. A labyrinth seal 32 is located at an impeller outer perimeter 34 to prevent airflow from leaking past the impeller outer perimeter 34. The labyrinth seal 32 is installed in and supported by a labyrinth seal mating ring 36 installed to the bearing support housing 30. As will be discussed in greater detail below, this labyrinth seal mating ring 36 includes features to prevent erosion of the bearing support housing 30.

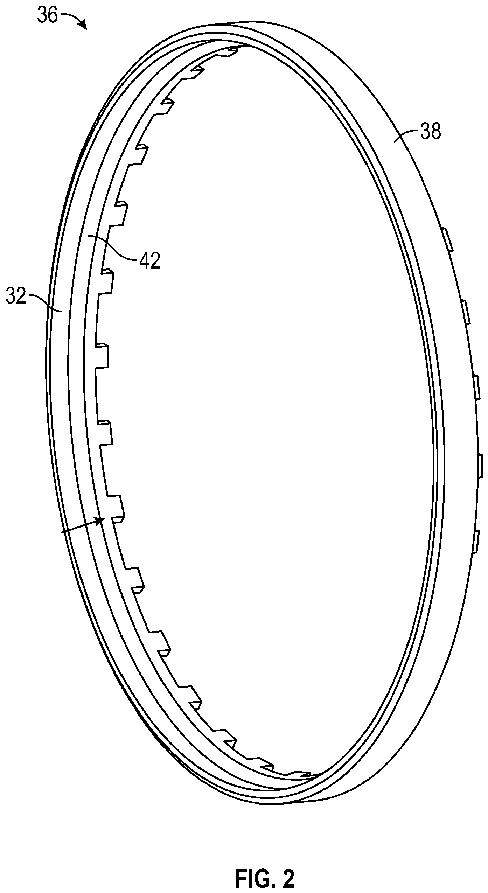

Referring now to FIG. 2, the labyrinth seal mating ring 36 is shown in more detail. The labyrinth seal mating ring 36 is a ring structure, having a ring outer surface 38, which mates to the bearing support housing 30. While illustrated as a complete ring, in some embodiments the labyrinth seal mating ring 36 may be a circumferentially segmented structure. The labyrinth seal 32 is located at a ring inner surface 42, substantially opposite to the ring outer surface 38. In some embodiments, the labyrinth seal mating ring 36 is formed from a relatively hard material, while the labyrinth seal 32 is formed from a relatively soft material.

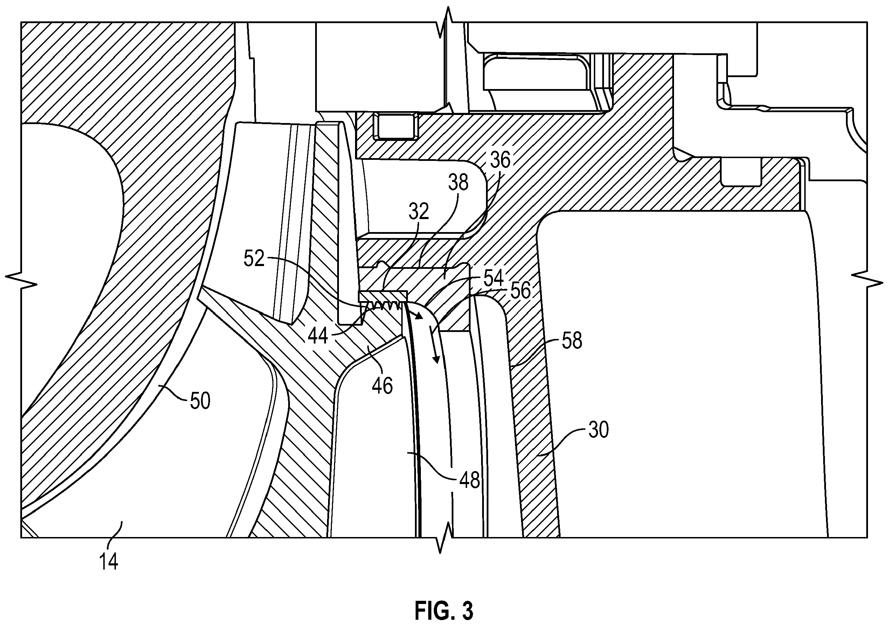

Referring now to FIG. 3, when installed, the labyrinth seal 32 is located at a corresponding impeller sealing surface 44 of the compressor impeller 14. In some embodiments, the impeller sealing surface 44 is located at a sealing flange 46 extending from a downstream side 48 of the compressor impeller 14 opposite an upstream side 50 relative to the location of the inlet 18. The labyrinth seal 32 and the impeller sealing surface 44 define a seal interface 52. The labyrinth seal mating ring 36 includes a deflector ramp 54 extending radially inboard from the ring inner surface 42. The deflector ramp 54 extends radially inboard of a radial location of the seal interface 52. In some embodiments the deflector ramp 54 is curvilinear such as shown in FIG. 3, while in other embodiments the deflector ramp 54 may be another shape, such as linear or some combination of curvilinear and linear.

In operation, air flow 22 that leaks past the seal interface 52 as leakage airflow 56 is diverted radially inwardly by the deflector ramp 54, to reduce impact of the leakage airflow 56 and any included particles or foreign objects on a support wall 58 of the bearing support housing 30. Such diversion of the leakage airflow 56 by the deflector ramp 54 reduces erosion of the bearing support housing 30.

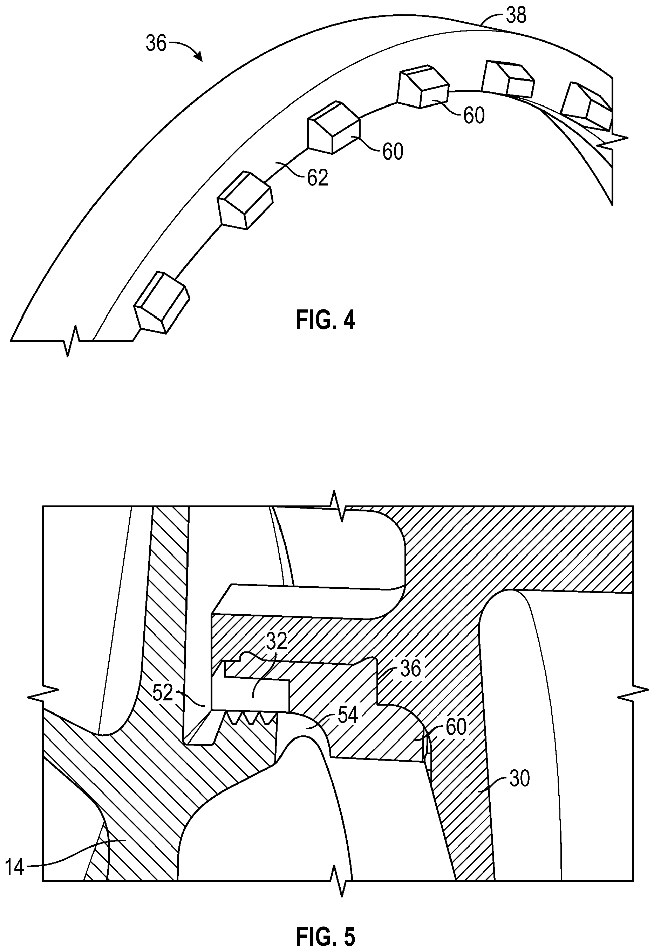

Referring now to FIG. 4 and FIG. 5, the labyrinth seal mating ring 36 includes a plurality of circumferentially spaced teeth 60 extending axially from a downstream wall 62 of the labyrinth seal mating ring 36. The leakage airflow 56 typically has a significant tangential velocity component due to rotation of the compressor impeller 14. The teeth 60 reduce this tangential velocity component and trap foreign object particles between adjacent teeth 60 to reduce the erosion of the bearing support housing 30.

The labyrinth seal mating ring 36 described herein reduces erosion of the bearing support housing 30 of the cabin air compressor 10, thus extending the service life of the bearing support housing 30 and the cabin air compressor 10 overall. Further, the labyrinth seal mating ring 36 is configured to be retrofittable into existing cabin air compressors 10, without the need to modify surrounding components.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A compressor assembly, comprising:
an impeller (14) rotatable about a central axis; and
a seal assembly including:
a labyrinth seal (32) defining a seal interface (52) with a sealing element of the impeller;
a seal support ring into which the labyrinth seal is installed, the seal support including a deflector ramp (54) fluidly downstream of the seal interface, the deflector ramp configured to turn an airflow leaking through the seal interface radially inwardly toward the central axis.

2. The compressor assembly of claim 1, wherein the seal support ring further includes a plurality of circumferentially spaced teeth (60) configured to diffuse a tangential component of the airflow.

3. The compressor assembly of claim 2, wherein the plurality of circumferentially spaced teeth (60) trap foreign object particles from the airflow between adjacent teeth of the circumferentially spaced teeth.

4. The compressor assembly of any preceding claim, wherein the deflector ramp (54) extends radially inboard of a radial location of the seal interface.

5. The compressor assembly of any preceding claim, wherein the labyrinth seal (32) is formed from a first, relatively soft material and the seal support ring is formed from a second, relatively hard material.

6. The compressor assembly of claim 1, further comprising:
a shaft (16) operably connected to the impeller; and
a bearing assembly including:
a bearing (28) supportive of the shaft; and
a bearing support housing (30) into which the bearing assembly is installed, the seal support ring disposed axially between the impeller and the bearing support housing.

7. The compressor assembly of claim 6, wherein the deflector ramp (54) deflects the airflow from impacting on the bearing support housing.

8. The compressor assembly of claim 6, wherein the seal support ring is installed to the bearing support housing.

9. The compressor assembly of any preceding claim, wherein the sealing element of the impeller is disposed at a sealing flange (46) of the impeller extending axially from the impeller.

10. A cabin air compressor, comprising:
a compressor housing (10) having an inlet (18) and an outlet (24); and
a compressor assembly as claimed in any preceding claim,
the impeller disposed in the housing, the impeller rotatable about a central axis and configured to compress an airflow directed through the inlet and direct the compressed airflow to the outlet.

11. The cabin air compressor of claim 10 when dependent on claim 6, further comprising an electrical motor (20) operably connected to the shaft to drive rotation of the impeller about the central axis.

12. The cabin air compressor of claim 10 or 11, wherein the compressed airflow is directed from the outlet to a cabin of an aircraft.
